# EUROPÄISCHE PATENTSCHRIFT

(11) **EP 0 629 717 B1**
(45) Veröffentlichungstag und Bekanntmachung des Hinweises auf die Patenterteilung: **28.01.1998**
(21) Anmeldenummer: 94108794.2
(22) Anmeldetag: 08.06.1994
(51) Int. Cl.: C23G 5/00

(54) **Vorrichtung und Verfahren zum Reinigen, insbesondere Entfetten von elektrisch leitfähigem Gut**
Apparatus and process for cleaning, particularly degreasing, electrically conducting materials
Appareil et procédé pour le nettoyage, en particulier le dégraissage, d'objets conducteurs électriques

(30) Priorität: 09.06.1993 DE 4319166; 25.09.1993 DE 4332688
(43) Veröffentlichungstag der Anmeldung: 21.12.1994
(73) Patentinhaber: ALD Vacuum Technologies GmbH, 63526 Erlensee (DE)
(72) Erfinder: Hugo, Franz, D-63743 Aschaffenburg (DE); Wanetzky, Erwin, D-63538 Grosskrotzenburg (DE)

(56) Entgegenhaltungen:
- EP-A- 0 541 892
- SU-A- 1 155 355
- US-A- 3 450 529
- US-A- 4 117 703
- US-A- 4 141 373
- US-A- 4 556 452

## Beschreibung

Die Erfindung betrifft eine Vorrichtung und ein Verfahren zur Reinigung, insbesondere zur Entfettung und Kompaktierung von elektrisch leitfähigem, metallischem und/oder keramischem Gut, beispielsweise Drehspänen und/oder Schleifschlämmen, unter Vakuumbedingungen.

Bei der spanabhebenden Bearbeitung oder dem Schleifen von Werkstücken fallen große Mengen von Spänen oder Schlämmen an, die durch den Bearbeitungsprozeß mit Emulsionen und mit Ölen benetzt sind. Das Öl oder die Emulsion ist für den Bearbeitungsprozeß notwendig; diese Flüssigkeiten dienen zur Kühlung des Werkstücks und zum Abtransport der anfallenden Späne und Schlämme. In den Filtern der Bearbeitungsmaschinen werden diese Späne von den Flüssigkeiten abgetrennt. Die Flüssigkeit selbst verbleibt in der Bearbeitungsmaschine, während die Schlämme und Späne aus den Filtern entfernt werden müssen. Durch die große Oberfläche der Späne werden große Mengen an Schmier- und Kühlflüssigkeit mit ausgetragen. Zur Reduzierung dieser Flüssigkeitsverluste werden Späne entsprechend dem Stand der Technik geschleudert oder gepreßt. Die Flüssigkeit wird in den Kreislauf zurückgeführt, während der verbleibende Rückstand entsorgt werden muß. Die Entsorgung dieser Späne und Schlämme bereitet aufgrund der ökologischen Unverträglichkeiten beachtliche Schwierigkeiten.

Durch die Kontamination der Späne und Schlämme mit den mineralischen Ölen, Estern, Glyzerinen, Emulgatoren, phosphorhaltigen oder schwermetallhaltigen Additiven und anderen kann eine direkte Rückführung dieser Wertstoffe in einen beispielsweise metallurgischen Schmelzprozeß nicht unmittelbar erfolgen. Ein weiteres Hindernis ist die geringe Schüttdichte der Späne. Zur problemlosen Entsorgung müßte eine Dekontamination und weitgehende Kompaktierung der Späne und/oder Schlämme erfolgen. In den bekannten Reinigungsverfahren erfolgt die Entfettung durch Waschen, Pressen oder Schleudern. In thermischen Prozessen wurde bislang die Wärme durch indirekt-, induktiv-, widerstandsbeheizte oder auch befeuerte Wärmequellen aufgebracht.

Aufgabe der vorliegenden Erfindung ist nun, eine Vorrichtung und ein Verfahren anzugeben, die, bzw. das die Reinigung, insbesondere die Entfettung von elektrisch leitfähigem Gut, beispielsweise metallischen und/oder keramischen Drehspänen und/oder Schleifschlämmen unter wirtschaftlich sinnvollen Bedingungen ermöglicht, alternative Ausführungsformen aufzeigt, und angibt, wie die dabei entstehenden Wertstoffe - Metalle, Keramiken bzw. Fette, Öle - einer Wiederverwertung zugeführt werden können.

Diese Aufgabe wird erfindungsgemäß durch eine Vorrichtung gelöst bestehend aus einer Vakuumkammer mit einem Vakuumpumpstand und mindestens einem Kondensator, einem mit mindestens einem Preßstempel, einem Walzenpaar oder einer Schnekke zusammenwirkenden Trog, Behälter oder Gehäuse, wobei das zu behandelnde Gut in den Trog, Behälter oder Gehäuse eingebracht wird und ein Preßstempel eine Walze oder das Gehäuse als Elektrode und der Trog, die andere Walze oder die Schnecke als Gegenelektrode ausgebildet sind und durch Anlegen einer elektrischen Spannung zwischen den Elektroden das zu behandelnde Gut durch direkten Stromdurchgang beheizbar ist, und wobei der Trog, der Behälter oder das Gehäuse und der Stempel, das Walzenpaar oder die Schnecke in der Vakuumkammer angeordnet sind und zwischen Kammer und Kondensator je ein Absperrorgan vorhanden ist.

Der durch die ölisolierten Oberflächen anfänglich noch hohe elektrische Widerstand wird nach kurzer Erwärmungszeit des zu behandelnden Gutes abnehmen, wobei sich ein konstanter elektrischer Widerstand einstellt.

Die elektrische Heizleistung entspricht dem Produkt aus Strom mal Spannung. Der für das Verfahren angelegte Strom wird regelmäßig so gewählt, daß in dem zu behandelnden Gut eine Stromdichte von mindestens 0,02 A/mm² für die Entölung eingestellt werden kann. Die maximale elektrische Spannung liegt unterhalb der Lichtbogenspannung, vorzugsweise 15 V, und sollte keinesfalls > 25 V gewählt werden.

Mit Vorteil weisen der Trog, der Behälter oder das Gehäuse mindestens einen Bodenablauf auf und sind die Innenwände des Trogs zur Vertikalen geneigt angeordnet, wobei die Projektionsfläche der Trogöffnung größer als die des Trogbodens ist. Die Außenform des Preßstempels entspricht dabei im wesentlichen der Form des Hohlraums des Trogs, wobei die Verstelleinrichtung des Preßstempels oberhalb des Trogs angeordnet ist und der Preßstempel so weit in den Trog geführt wird, bis der vertikale und der horizontale Abstand zwischen den Außenflächen des Preßstempels und den Innenwänden des Trogs gleich groß sind. In einer bevorzugten Ausführungsform ist der Preßstempel mit der Verstelleinrichtung am Kammerdeckel befestigt und der Kondensator zweistufig ausgeführt.

Zweckmäßigerweise bestehen die Innenwände des Trogs, des Behälters oder Gehäuses aus elektrisch nicht leitendem Werkstoff und sind die Elektroden mit Gleich- oder Wechselspannung betreibbar. Die Randzonen der Elektroden sind während des Beheizens trocken. Der Kondensator ist mit Vorteil zweistufig ausgeführt. Die Fette und Öle, welche durch das Heizen des Guts verdampfen, werden in einem separaten Gefäß gesammelt und einer Wiederverwertung zugeführt.

Erfindungsgemäß ist beim Verfahren zur Reinigung und Kompaktierung das zu behandelnde Gut in einen in einer über ein Absperrorgan mit einem Kondensator verbundenen Vakuumkammer vorhanden und wird in einen mit einem Bodenablauf versehenen Trog, Behälter oder Gehäuse eingebracht, wobei zur Kompaktierung ein Preßstempel, eine Widerstandspresse, eine Walzenpresse oder ein Extruder angeordnet sind und der Preßstempel, die eine Walze oder das Gehäuse des Extruders als Elektrode und der Trog, der Stempel, die andere Walze oder die Extruderschnecke als Gegenelektrode ausgebildet sind und wobei durch Anlegen einer elektrischen Spannung zwischen den Elektroden das zu behandelnde Gut durch direkten Stromdurchgang beheizt wird und in dem zu behandelnden Gut eine Stromdichte von mindestens 0,02 A/mm² eingestellt ist.

Vorzugsweise ist die angelegte elektrische Spannung kleiner als die Lichtbogenspannung und die Behandlungstemperatur des Gutes größer als die Anlaß- bzw. Sintertemperatur. Zweckmäßigerweise wird der Preßstempel während des Erwärmungsvorgangs ständig nachgestellt und das Gut kompaktiert. Der resultierende elektrische Gesamtwiderstand des zu beheizenden Gutes wird als Funktion des spezifischen elektrischen Widerstandes, der elektrisch wirksamen Widerstandslänge und der elektrisch wirksamen Querschnittsfläche berechnet. Mit Vorteil werden die elektrisch wirksame Widerstandslänge und die elektrisch wirksame Querschnittsfläche des zu beheizenden Gutes so ausgelegt, daß die Lichtbogenspannung nicht erreicht wird, wobei zum Verdichten des Gutes eine Behandlungstemperatur einstellbar ist, welche größer ist als die Anlaß- bzw. Sintertemperatur des Gutes.

Da die Späne anfänglich ein großes Volumen in dem Trog beanspruchen, ist für deren Verdichtung eine Temperatur oberhalb der Anlaßtemperatur der jeweiligen Stahlqualität bzw. oberhalb der Sintertemperatur der Keramikqualität erforderlich. Bei diesen Temperaturen verlieren die Späne ihre Federeigenschaften und können somit plastisch verformt, d. h. kompaktiert werden.

Die Elektroden sind selbst so ausgebildet, daß eine gleichgroße Stromdurchflutung erreicht wird. Damit wird der gesamte Spänequerschnitt auf Verdampfungstemperatur des Öls bzw. Erweichungstemperatur aufgeheizt.

Die Preßelektrode bzw. der Preßstempel sind vorzugsweise nicht gekühlt. Die Vakuumkammer, in der der Trog mit dem Preßstempel untergebracht ist, ist so gestaltet, daß das Kondensat an den Kammerwänden abläuft und nicht auf den Preßling in dem Trog zurücktropfen kann.

In einem Ausführungsbeispiel sind die folgenden typischen Verfahrensparameter für die Entfettung eingestellt:
a. Spezifisches Schüttgewicht der Späne 0,4 kg/dm³.
b. Spezifischer elektrische Widerstand nach dem Einbringen in den Trog 200 mmΩcm.
c. Stromdichte 0,02 A/mm².
d. Spannung zwischen den Elektroden, ca. 10 Volt, bei einem Elektrodenabstand von ca. 200 mm.

Bei den mit Ölen und/oder Fetten beladenen Gütern ist immer mit einem adsorbierten und einem absorbierten Wasseranteil zu rechnen. Dabei sind während der Vorevakuierung Drücke nur bis zum Tripelpunkt möglich. Bei der Behandlung dieser Güter geht man bei dem erfindungsgemäßen Verfahren daher zweistufig vor. Dabei wird zu Anfang die hohe latente Wärme des Wassers zur intensiven und schnellen Vorheizung der eingesetzten Güter und zum Verflüssigen der hochviskosen Fettschicht benutzt. Während das Wasser in Dampfform in einem separaten Evakuierungs- und Kondensationsschritt aus dem System entfernt wird, tropft die Fettschicht ab. In einem Ausführungsbeispiel wurde der Behälter als Trog ausgeformt und der Trogboden mit Bohrungen versehen, durch die das fließfähige Öl ablaufen kann. Der weitere erfindungsgemäße Prozeßablauf erfolgt dann wie bereits beschrieben.

Im Gegensatz zu bekannten Verfahren erfordert die erfindungsgemäße Vorrichtung und das Verfahren eine durch ein Absperrorgan ermöglichte Trennung der Vakuumkammer von einem Kondensator, welcher mit der Kammer in Verbindung steht und zur Abscheidung und Sammlung der Fette und Öle dient.

Die Erfindung läßt die verschiedenartigsten Ausführungsmöglichkeiten zu; einige davon sind in den anhängenden Zeichnungen näher dargestellt und beschrieben und zwar zeigen:
- Fig. 1: eine Vakuumkammer mit einem Trog, einem Preßstempel und einem Vakuumpumpstand in Schnittdarstellung,
- Fig. 2: eine Vorrichtung gemäß Fig. 1, jedoch mit einer zum Beladen geöffneten Vakuumkammer,
- Fig. 3: eine Vakuumkammer mit Kammerdeckel und Preßstempel in Schnittdarstellung entlang der Linie XX in Fig. 1,
- Fig. 4: eine Widerstandspresse mit einem hohlzylindrischen Behälter und zwei Elektroden in schematischer Darstellung,
- Fig. 5: eine Walzenpresse mit einem Walzenpaar und einem Spänebehälter in schematischer Darstellung und
- Fig. 6: einen elektrisch durchfluteten Extruder in schematischer Darstellung.

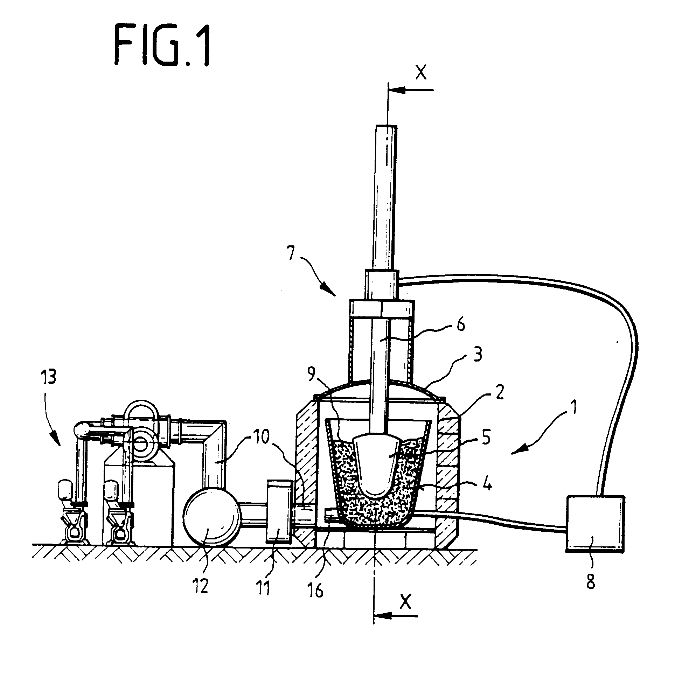

Eine Vakuumkammer 1 (Fig. 1) besteht aus einem wannenförmigen Kammerunterteil 2 sowie einem kalottenförmigen Kammerdeckel 3. Auf dem Boden des Kammerunterteils 2 steht ein in Richtung der Schnittlinie XX teilbarer Trog 4 mit einem Bodenablauf 16. In den Trog 4 ragt von oben ein in Schnittdarstellung pilzförmiger Stempel 5 hinein. Der Preßstempel 5 ist über einen Stempelschaft 6 mit einer hydraulischen Verstelleinrichtung 7 verbunden, welche oberhalb des Kammerdeckels 3 angeordnet ist. Der Trog 4 sowie der Preßstempel 5 sind mit einer Stromversorgungseinheit 8 verbunden, so daß sich der Stempel 5 als Elektrode und der Trog 4 als Gegenelektrode ausbilden und das in dem Trog 4 befindliche zu behandelnde Gut 9 durch direkten Stromdurchgang beheizbar ist.

In dem Kammerunterteil 2 ist eine Saugleitung 10 vorgesehen, in der ein Absperrorgan 11 angeordnet ist. Diesem schließt sich ein Kondensator 12 sowie ein Vakuumpumpstand 13 an.

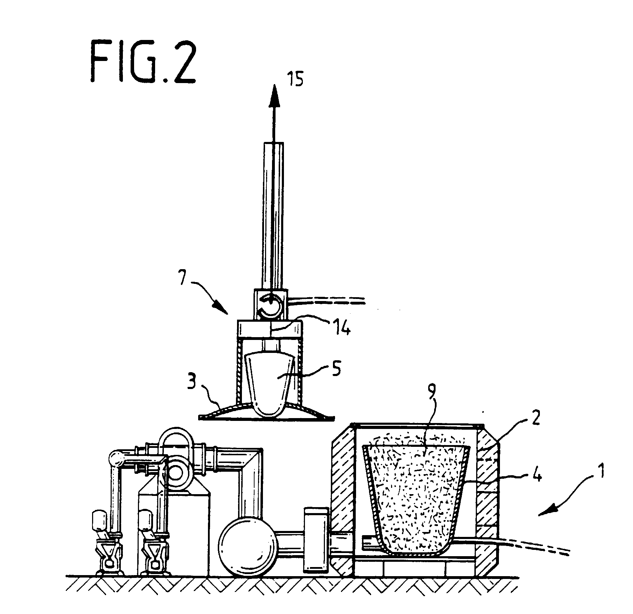

Zum Be- und Entladen der Vakuumkammer 1 (Fig. 2) wird der Preßstempel 5 mittels der Verstelleinrichtung 7 in die oberste Position im Kammerdeckel 3 gefahren. Anschließend wird der Kammerdeckel 3 durch eine nicht gezeigte Hebel- und Verfahreinrichtung 15 vom Kammerunterteil 2 abgenommen. In den Trog 4 wird nun das zu behandelnde Gut 9, beispielsweise Drehspäne, von oben lose eingefüllt. Während des Be- und Entladevorgangs befindet sich der Preßstempel 5 vollständig innerhalb des Vakuumkammerdeckels 3.

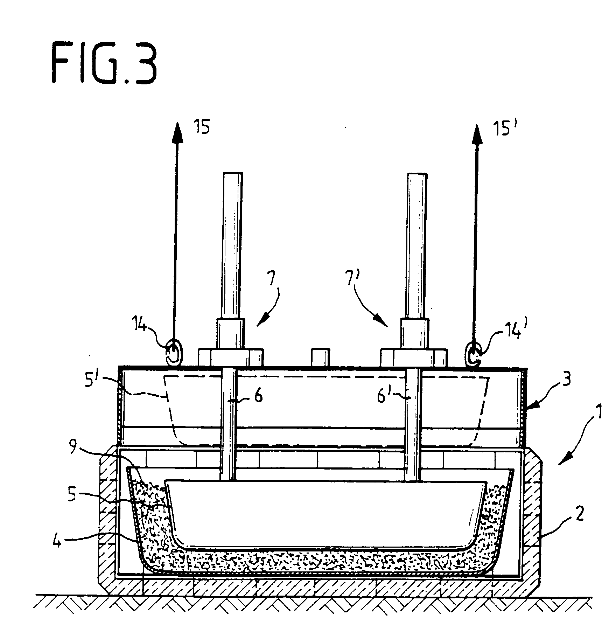

In einer Schnittdarstellung (Fig. 3) entlang der Linie XX in Fig. 1 erkennt man die langgestreckte Form der Vakuumkammer 1 und ihrer Einbauten. Der Trog 4 und der Preßstempel 5 weisen beide eine schiffsrumpfförmige Kontur auf, wobei im Betriebszustand in der untersten Position des Preßstempels der vertikale und der horizontale Abstand zwischen den Außenflächen des Preßstempels 5 und den Innenwänden des Trogs 4 etwa gleich groß sind.

Auf der Oberseite des Stempels 5 sind die beiden Stempelschäfte 6, 6' vorgesehen, welche mittels der Verstelleinrichtungen 7, 7' den Preßstempel in die obere Ruheposition 5' in den Kammerdeckel 3 bewegen.

Die Hebeeinrichtung 15, 15' greift über Seile an Ösen 14, 14' an, welche auf der Oberseite des Kammerdeckels 3 angebracht sind.

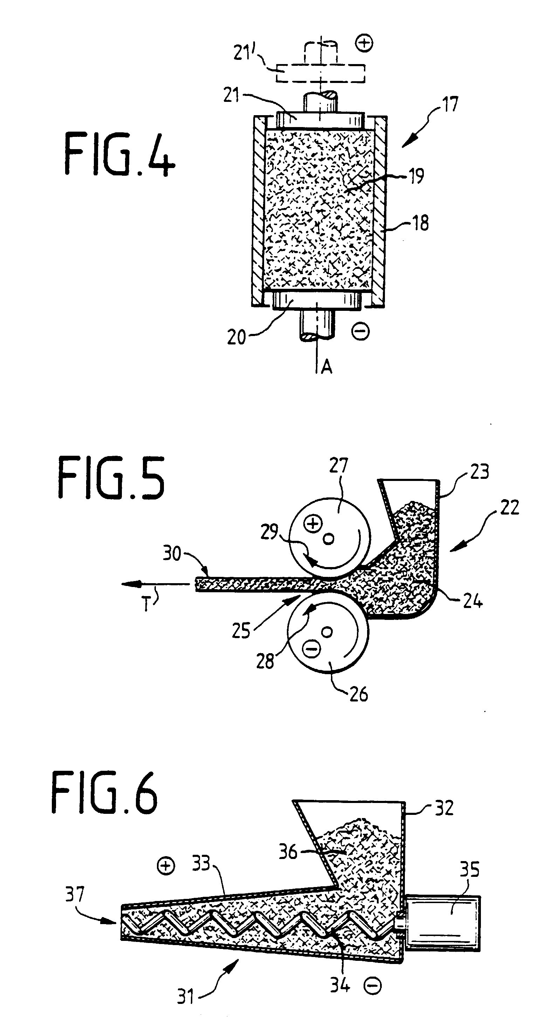

Eine alternative Ausführungsform (Fig. 4) zu der oben beschriebenen Form der erfindungsgemäßen Vorrichtung ist eine Widerstandspresse 17. Diese besteht aus einem hohlzylindrischen Behälter 18, welcher aus einer elektrisch isolierenden Keramik hergestellt ist und in dessen Innenraum die zu behandelnden Späne 19 eingebracht werden. Die Stirnseiten des Behälters 18 sind durch die stempelförmigen Elektroden 20 und 21 verschließbar. Die beiden Elektroden 20, 21 sind in Achsrichtung A des Behälters 18 verstellbar. Die gezeigten Positionen der Elektroden 20 und 21 sind Momentaufnahmen während eines Preßvorgangs. Vor Beginn des Preßvorgangs beanspruchen die Späne 19 durch ihre Sperrigkeit ein größeres Volumen, so daß sich zu Beginn des Entfettungsverfahrens die Elektrode in der gestrichelten Position 21' befindet. Die gesamte Anordnung der Widerstandspresse 17 ist innerhalb eines Vakuumbehälters vorgesehen, welcher der Einfachheit halber nicht dargestellt ist.

Eine weitere Ausführungsform ist eine Walzenpresse 22 (Fig. 5). Diese besteht aus einem trichterförmigen verschließbaren Behälter 23, in welchen das zu behandelnde Gut, beispielsweise Späne 24 eingefüllt werden. Im Bereich der schlitzförmigen Öffnung 25 des Behälters 23 ist ein Walzenpaar mit den zylindrischen Walzen 26, 27 angeordnet. Diese Walzen 26, 27 sind gleichzeitig als Elektroden ausgebildet und für gegenläufige Drehrichtungen 28, 29 vorgesehen. Dadurch werden die Späne 24 nach Verlassen der Öffnung 25 des Behälters 23 erwärmt und zu einer Platte 30 ausgewalzt. Durch Anordnung weiterer Walzenpaare, ähnlich denen der Walzen 26, 27, in Transportrichtung T kann die Dicke der Platte 30 auf ein beliebiges Maß reduziert werden. Weitere Walzenpaare, sowie auch eine die Walzenpresse umgebende Vakuumkammer sind der Einfachheit halber nicht dargestellt.

Eine weitere alternative Ausführungsform der erfindungsgemäßen Vorrichtung (Fig. 6) ist ein elektrisch durchfluteter Extruder 31. Dieser besteht aus einem trichterförmigen Einlaufgehäuse 32 sowie einem konischen Schneckengehäuse 33, in dem eine Förderschnecke 34 angeordnet ist. Die Schnecke 34 wird mittels eines Motors 35 stirnseitig angetrieben. Die zu behandelnden Späne 36 werden in den Trichter 32 eingefüllt und mittels der Förderschnecke 34 zur Austrittsöffnung 37 des Gehäuses 33 gefördert. Durch Ausbildung des Schnekkengehäuses 33 als Elektrode sowie der Schnecke 34 als Gegenelektrode werden die Späne 36 im Bereich zwischen den beiden Elektroden 33, 34 geheizt und komprimiert. Nach dem Befüllen des Trichtergehäuses 32 mit Spänen 36 ist dieses vakuumdicht verschließbar. Im Bereich des Schneckengehäuses 33 ist eine Absaug- und Kondensationsvorrichtung vorgesehen, welche der Einfachheit halber nicht gezeigt ist, im wesentlichen jedoch der Darstellung in Fig. 1 entspricht.

Anstelle der in den Figuren 4 bis 6 gezeigten Polung der Elektroden mit + und - ist selbstverständlich auch eine gegensätzliche Polung bei Anschluß einer Gleichspannungsversorgung denkbar. Es ist ebenso möglich, die Elektroden an einer Wechselspannungsquelle anzuschließen.

### AUFLISTUNG DER EINZELTEILE

- 1: Vakuumkammer
- 2: Kammerunterteil
- 3: Kammerdeckel
- 4: Trog, Gegenelektrode
- 5: Preßstempel, Elektrode
- 6, 6': Stempelschaft
- 7, 7': Verstelleinrichtung
- 8: Stromversorgungseinheit
- 9: Gut, Drehspäne
- 10: Saugleitung
- 11: Absperrorgan
- 12: Kondensator
- 13: Vakuumpumpstand
- 14, 14': Öse
- 15, 15': Hebe- und Verfahreinrichtung
- 16: Bodenablauf
- 17: Widerstandspresse
- 18: Behälter
- 19: Späne
- 20: Elektrode
- 21, 21': Elektrode
- 22: Walzenpresse
- 23: Behälter
- 24: Späne
- 25: Öffnung
- 26: Walze, Elektrode
- 27: Walze, Elektrode
- 28: Drehrichtung
- 29: Drehrichtung
- 30: Platte
- 31: Extruder
- 32: Gehäuse
- 33: Gehäuse, Elektrode
- 34: Schnecke, Elektrode
- 35: Motor
- 36: Späne
- 37: Austrittsöffnung

- X-X: Schnittlinie
- A: Achsrichtung
- T: Transportrichtung
- R: Elektrischer Gesamtwiderstand Spezifischer elektrischer Widerstand
- L: Widerstandslänge
- A: Querschnittfläche

## Patentansprüche

1. Vorrichtung zur Reinigung, insbesondere zur Entfettung und Kompaktierung von elektrisch leitfähigem, metallischem und/oder keramischem Gut (9,19,24,36), beispielsweise Drehspänen und/oder Schleifschlämmen, im wesentlichen bestehend aus einer Vakuumkammer (1) mit einem Vakuumpumpstand (13) und mindestens einem Kondensator (12), einem mit mindestens einem Preßstempel (5,20,21), einem Walzenpaar (26,27) oder einer Schnecke (34) zusammenwirkenden Trog (4), Behälter (18,23) oder Gehäuse (32,33), wobei das zu behandelnde Gut (9) in den Trog (4), Behälter (18,23) oder Gehäuse (32,33) eingebracht wird und ein Preßstempel (5,21) eine Walze (27) oder das Gehäuse (32) als Elektrode und der Trog (4), die andere Walze (26) oder die Schnecke (34) als Gegenelektrode ausgebildet sind und durch Anlegen einer elektrischen Spannung zwischen den Elektroden (4,20,26,34 und 5,21,27,32) das zu behandelnde Gut (9) durch direkten Stromdurchgang beheizbar ist, und wobei der Trog (4), der Behälter (18,23) oder das Gehäuse (32,33) und der Stempel (5), das Walzenpaar (26,27) oder die Schnecke (34) in der Vakuumkammer (1) angeordnet sind und zwischen Kammer (1) und Kondensator (12) je ein Absperrorgan (11) vorhanden ist.

2. Vorrichtung nach Anspruch 1, **dadurch gekennzeichnet**, daß der Trog (4), der Behälter (18,23) oder das Gehäuse (32,33) mindestens einen Bodenablauf (16,25,37) aufweist.

3. Vorrichtung nach Anspruch 2, **dadurch gekennzeichnet**, daß die Innenwände des Trogs (4) zur vertikalen geneigt angeordnet sind und die Projektionsfläche der Trogöffnung größer ist als die des Trogbodens.

4. Vorrichtung nach Anspruch 3, **dadurch gekennzeichnet**, daß die Außenform des Preßstempels (5) im wesentlichen der Form des Hohlraums des Trogs (4) entspricht.

5. Vorrichtung nach Anspruch 1, **dadurch gekennzeichnet**, daß die Verstelleinrichtung (7,7') des Preßstempels (5) oberhalb des Trogs (4) angeordnet ist.

6. Vorrichtung nach Anspruch 3, **dadurch gekennzeichnet,** daß der Preßstempel (5) so weit in den Trog (4) geführt wird, bis der vertikale und der horizontale Abstand zwischen den Außenflächen des Preßstempels (5) und den Innenwänden des Trogs (4) gleich groß sind.

7. Vorrichtung nach Anspruch 5, **dadurch gekennzeichnet**, daß der Preßstempel (5) mit der Verstelleinrichtung (7,7') am Kammerdeckel (3) befestigt ist.

8. Vorrichtung nach Anspruch 1, **dadurch gekennzeichnet,** daß der Kondensator (12) zweistufig ausgeführt ist.

9. Vorrichtung nach einem oder mehreren der vorhergehenden Ansprüche, **dadurch gekennzeichnet**, daß die Innenwände des Trogs (4), des Behälters (18,23) oder Gehäuses (32,33) aus elektrisch nicht leitendem Werkstoff bestehen.

10. Vorrichtung nach Anspruch 1, **dadurch gekennzeichnet,** daß die Elektroden (4,5,20,21, 26,27,33,34) mit Gleich- oder Wechselspannung betreibbar sind.

11. Vorrichtung nach einem oder mehreren der vorhergehenden Ansprüche, **dadurch gekennzeichnet,** daß die Randzonen der Elektroden (4,5,20,21,26,27,33,34) während des Beheizens trocken sind.

12. Vorrichtung nach Anspruch 8, **dadurch gekennzeichnet,** daß der Kondensator (12) zweistufig ausgeführt ist.

13. Vorrichtung nach einem oder mehreren der vorhergehenden Ansprüche, **dadurch gekennzeichnet,** daß die Fette und Öle, welche durch das Heizen des Guts (9,19,24,36) verdampfen, in einem separaten Gefäß (12) gesammelt und einer Wiederverwertung zugeführt werden.

14. Verfahren zur Reinigung, insbesondere Entfettung und Kompaktierung von elektrisch leitfähigem, metallischem und/oder keramischem Gut (9), beispielsweise Drehspänen und/oder Schleifschlämmen, wobei das zu behandelnde Gut (9) in einen in einer über ein Absperrorgan (11) mit einem Kondensator (12) verbundenen Vakuumkammer (1) vorhanden ist und mit einem Bodenablauf (16,25,37) versehenen Trog (4), Behälter (18,23) oder Gehäuse (32,33) eingebracht wird und zur Kompaktierung ein Preßstempel (5), eine Widerstandspresse (17), eine Walzenpresse (22) oder ein Extruder (31) angeordnet sind und der Preßstempel (5,21), die eine Walze (27) oder das Gehäuse (32,33) des Extruders (31) als Elektrode und der Trog (4), der Stempel (20), die andere Walze (26) oder die Extruderschnecke (34) als Gegenelektrode ausgebildet sind, wobei durch Anlegen einer elektrischen Spannung zwischen den Elektroden (4,20,26,34 und 5,21,27,32,33) das zu behandelnde Gut (9) durch direkten Stromdurchgang beheizt wird und in dem zu behandelnden Gut (9) eine Stromdichte von mindestens 0,02 A/mm² eingestellt ist.

15. Verfahren nach Anspruch 14, **dadurch gekennzeichnet**, daß die angelegte elektrische Spannung kleiner als die Lichtbogenspannung ist.

16. Verfahren nach Anspruch 14, **dadurch gekennzeichnet,** daß die Behandlungstemperatur des Gutes (9) größer ist als die Anlaß- bzw. Sintertemperatur.

17. Verfahren nach Anspruch 14, **dadurch gekennzeichnet**, daß der Preßstempel (5) während des Erwärmungsvorgangs ständig nachgestellt wird und das Gut (9) kompaktiert.

18. Verfahren nach Anspruch 14, **dadurch gekennzeichnet**, daß der resultierende elektrische Gesamtwiderstand (R) des zu beheizenden Gutes (9,19,24,36) als Funktion des spezifischen elektrischen Widerstandes (r), der elektrisch wirksamen Widerstandslänge (L) und der elektrisch wirksamen Querschnittsfläche (A) berechnet wird.

19. Verfahren nach Anspruch 14, **dadurch gekennzeichnet**, daß die elektrisch wirksame Widerstandslänge (L) und die elektrisch wirksame Querschnittsfläche (A) des zu beheizenden Gutes (9,19,24,36) so ausgelegt ist, daß die Lichtbogenspannung nicht erreicht wird.

20. Verfahren nach Anspruch 14, **dadurch gekennzeichnet,** daß zum Verdichten des Gutes (9,19,24,36) eine Behandlungstemperatur einstellbar ist, welche größer ist als die Anlaß- bzw. Sintertemperatur des Gutes (9,19,24,36).

## Claims

1. Apparatus for cleaning, particularly for degreasing and compacting electrically conductive, metallic and/or ceramic material (9, 19, 24, 36), for example turning chips and/or grinding sludges, the said apparatus essentially consisting of a vacuum chamber (1) with a vacuum pump stand (13) and at least one condenser (12), a trough (4), container (18, 23) or housing (32, 33) interacting with at least one pressing ram (5, 20, 21), a pair of rollers (26, 27) or a worm (34), wherein the material (9) to be treated is placed in the trough (4), container (18, 23) or housing (32, 33) and a pressing ram (5, 21), one roller (27) or the housing (32) is constructed as an electrode and the trough (4), the other roller (26) or the worm (34) is constructed as a counterelectrode and the material (9) to be treated can be heated by the direct passage of current as a result of the application of an electrical voltage between the electrodes (4, 20, 26, 34 and 5, 21, 27, 32), and wherein the trough (4), the container (18, 23) or the housing (32, 33) and the ram (5), the pair of rollers (26, 27) or the worm (34) are disposed in the vacuum chamber (1) and one shut-off device at a time is present between the chamber (1) and the condenser (12).

2. Apparatus according to claim 1, **characterised in that** the trough (4), the container (18, 23) or the housing (32, 33) has at least one bottom outlet (16, 25, 37).

3. Apparatus according to claim 2, **characterised in that** the inner walls of the trough (4) are disposed so as to be inclined to the vertical and the surface of projection of the aperture of the trough is greater than that of the bottom of the trough.

4. Apparatus according to claim 3, **characterised in that** the external shape of the pressing ram (5) substantially corresponds to the shape of the cavity of the trough (4).

5. Apparatus according to claim 1, **characterised in that** the adjusting arrangement (7, 7') for the pressing ram (5) is disposed above the trough (4),

6. Apparatus according to claim 3, **characterised in that** the pressing ram (5) is guided into the trough (4) to a point where the vertical and horizontal intervals between the external faces of the pressing ram (5) and the inner walls of the trough (4) are of equal size.

7. Apparatus according to claim 5, **characterised in that** the pressing ram (5) is fastened, with the adjusting arrangement (7, 7'), to the cover (3) of the chamber.

8. Apparatus according to claim 1, **characterised in that** the condenser (12) is of two-stage design.

9. Apparatus according to one of more of the preceding claims, **characterised in that** the internal walls of the trough (4), the container (18, 23) or the housing (32, 33) consist of electrically non-conductive material.

10. Apparatus according to claim 1, **characterised in that** the electrodes (4, 5, 20, 21, 26, 27, 33, 34) can be operated with direct current or alternating current voltage.

11. Apparatus according to one or more of the preceding claims, **characterised in that** the edge zones of the electrodes (4, 5, 20, 21, 26, 27, 33, 34) are dry during the heating operation.

12. Apparatus according to claim 8, **characterised in that** the condenser (12) is of two-stage design.

13. Apparatus according to one or more of the preceding claims, **characterised in that** the greases and oils, which evaporate as a result of the heating of the material (9, 19, 24, 36), are collected in a separate vessel (12) and fed to a recycling system.

14. Process for cleaning, particularly degreasing and compacting electrically conductive, metallic and/or ceramic material (9), for example turning chips and/or grinding sludges, wherein the material (9) to be treated is present in a vacuum chamber (1) connected to a condenser (12) via a shut-off device (11) and is placed in a trough (4), container (18, 23) or housing (32, 33) provided with a bottom outlet (16, 25, 37), and a pressing ram (5), a resistance press (17), a roller press (22) or an extruder (31) are disposed for compacting purposes, and the pressing ram (5, 21), one roller (27) or the housing (32, 33) of the extruder (31) is constructed as an electrode and the trough (4), the ram (20), the other roller (26) or the extruder worm (34) is constructed as a counterelectrode, wherein the material (9) to be treated is heated by the direct passage of current as a result of the application of an electrical voltage between the electrodes (4, 20, 26, 34 and 5, 21, 27, 32, 33), and a current density of at least 0.02 A/mm² is set up in the material (9) to be treated.

15. Process according to claim 14, **characterised in that** the electrical voltage applied is smaller than the arc voltage.

16. Process according to claim 14, **characterised in that** the treatment temperature of the material (9) is greater than the tempering or sintering temperature.

17. Process according to claim 14, **characterised in that** the pressing ram (5) is constantly readjusted during the heating-up operation and compacts the material (9).

18. Process according to claim 14, **characterised in that** the resulting overall electrical resistance (R) of the material (9, 19, 24, 36) to be heated is calculated as a function of the specific electrical resistance (r), the electrically operative resistance length (L) and the electrically operative cross-sectional area (A).

19. Process according to claim 14, **characterised in that** the electrically operative resistance length (L) and the electrically operative cross-sectional area (A) of the material (9, 19, 24, 36) to be heated is so designed that the arc voltage is not reached.

20. Process according to claim 14, **characterised in that,** for the purpose of compressing the material (9, 19, 24, 36), a treatment temperature can be set which is greater than the tempering or sintering temperature of the material (9, 19, 24, 36).

## Revendications

1. Appareil pour le nettoyage, en particulier pour le dégraissage et le compactage d'un produit (9, 19, 24, 36) métallique et/ou céramique, électriquement conducteur, par exemple des tournures et/ou des boues de meulage, essentiellement constitué d'une chambre à vide (1) avec un poste (13) de pompe à vide et au moins un condenseur (12), une auge (4), un récipient (18, 23) ou un carter (32, 33) collaborant avec au moins un poinçon de pressage (5, 20, 21), une paire de rouleaux (26, 27) ou une vis sans fin (34), dans lequel on place le produit à traiter (9) dans l'auge (4), le récipient (18, 23) ou le carter (32, 33) et dans lequel un poinçon de pressage (5, 21), un rouleau (27) ou le carter (32) forment une électrode et l'auge (4), l'autre rouleau (26) ou la vis sans fin (34), forme une contre-électrode, et dans lequel, en appliquant une tension électrique entre les électrodes (4, 20,, 26, 34 et 5, 21, 27, 32), on peut chauffer le produit à traiter (9) par passage direct d'un courant et dans lequel l'auge (4), le récipient (18, 23) ou le carter (32, 33) et le poinçon (5), la paire de rouleaux (26, 27) ou la vis sans fin (34) sont disposés dans la chambre à vide (1) et dans lequel, entre chambre (1) et condenseur (12) il y a chaque fois un organe d'arrêt (11).

2. Appareil selon la revendication 1, caractérisé par le fait que l'auge (4), le récipient (18, 23) ou le carter (32, 33) présente au moins une sortie par le fond (16, 25, 37).

3. Appareil selon la revendication 2, caractérisé par le fait que les parois intérieures de l'auge (4) sont disposées inclinées par rapport à la verticale et que la surface projetée de l'ouverture de l'auge est supérieure à celle du fond de l'auge.

4. Appareil selon la revendication 3, caractérisé par le fait que la forme extérieure du poinçon de pressage (5) correspond sensiblement à la forme de l'espace creux de l'auge (4).

5. Appareil selon la revendication 1, caractérisé par le fait que le dispositif (7, 7') de déplacement du poinçon de pressage (5) est disposé au-dessus de l'auge (4).

6. Appareil selon la revendication 3, caractérisé par le fait que le poinçon de pressage (5) pénètre assez loin dans l'auge (4) pour que la distance verticale et la distance horizontale entre les surfaces extérieures du pressage (5) et les surfaces intérieures de l'auge (4) soient égales.

7. Appareil selon la revendication 5, caractérisé par le fait que le poinçon de pressage (5) avec le dispositif de emplacement (7, 7') est fixé au plafond (3) de la chambre.

8. Appareil selon la revendication 1, caractérisé par le fait que le condenseur (12) est réalisé en deux étages.

9. Appareil selon une ou plusieurs des revendication précédentes, caractérisé par le fait que les parois intérieures de l'auge (4), du récipient (18, 23) ou du carter (32, 33) sont constituées d'un matériau électriquement non conducteur.

10. Appareil selon la revendication 1, caractérisé par le fait que les électrodes (4, 5, 20, 21, 26, 27, 33, 34) peuvent être mises sous tension continue ou alternative.

11. Appareil selon une ou plusieurs des revendications précédentes, caractérisé par le fait que les zones de bordure des électrodes (4, 5, 20, 21, 26, 27, 33, 34) sont sèches pendant le chauffage.

12. Appareil selon la revendication 8, caractérisé par le fait que le condenseur (12) est réalisé en deux étages.

13. Appareil selon une ou plusieurs des revendications précédentes, caractérisé par le fait que les graisses et les huiles qui se vaporisent sous l'effet du chauffage du produit (9, 19, 24, 36) sont recueillies dans un récipient distinct (12) et envoyées à un autre traitement.

14. Procédé de nettoyage, en particulier dégraissage et compactage d'un produit (9) métallique et/ou céramique, électriquement conducteur, par exemple des tournures et/ou des boues de meulage, dans le cas duquel le produit à traiter (9) se trouve dans une chambre à vide reliée à un condenseur (12) par l'intermédiaire d'un organe d'arrêt (11) et on le place dans une auge (4), un récipient (18, 23) ou un carter (32, 33) muni d'une sortie par le fond (16, 25, 37), et dans le cas duquel, pour le compactage, sont disposés un poinçon de pressage (5), une presse à résistance (17), une presse à rouleaux (22) ou une extrudeuse (31) et dans le cas duquel le poinçon de pressage (5, 21), l'un des rouleaux (27) ou le carter (32, 33) de l'extrudeuse (31) forment une électrode et l'auge (4), le poinçon (20), l'autre rouleau (26) ou la vis sans fin (34) de l'extrudeuse forment une contre-électrode, dans le cas duquel, en appliquant une tension électrique entre les électrodes (4, 20, 26, 34 et 5, 21, 27, 32, 33), on chauffe le produit à traiter (9) par passage direct d'un courant et on règle dans le produit à traiter (13) une densité de courant d'au moins 0,02 A/mm².

15. Procédé selon la revendication 14, caractérisé par le fait que la tension électrique appliquée est inférieure à la tension d'arc.

16. Procédé selon la revendication 14, caractérisé par le fait que la température de traitement du produit (9) est supérieure à la température de revenu ou de frittage.

17. Procédé selon la revendication 14, caractérisé par le fait que pendant le processus de chauffage on reprend en permanence le réglage du poinçon de pressage (5) et on compacte le produit (9).

18. Procédé selon la revendication 14, caractérisé par le fait que l'on calcule la résistance électrique totale résultante (R) du produit à chauffer (9, 19, 24, 36) en fonction de la résistance électrique spécifique (r), de la longueur électriquement efficace (L) de la résistance et de la surface électriquement efficace (A) de la section.

19. Procédé selon la revendication 14, caractérisé par le fait que la longueur électriquement efficace (L) de la résistance et la surface électriquement efficace (A) de la section du produit à chauffer (9, 19, 24, 36) sont conçues de façon à ce que le tension d'arc ne soit pas atteinte.

20. Procédé selon la revendication 14, caractérisé par le fait que pour compacter le produit (9, 19, 24, 36) on peut régler une température de traitement supérieure à la température de revenu ou de frittage du produit (9, 19, 24, 36).
